# FASCICULE DE BREVET EUROPEEN

(11) **EP 0 488 846 B1**
(45) Date de publication et mention de la délivrance du brevet: **19.10.1994**
(21) Numéro de dépôt: 91403038.2
(22) Date de dépôt: 13.11.1991
(51) Int. Cl.: B23K 7/06

(54) **Procédé et dispositif d'usinage par flamme de chalumeau pour éliminer par oxycoupage des criques dans des brames dans une installation sidérurgique**
Verfahren und Vorrichtung für die Flämmbearbeitung zur Beseitigung von Warmrissen in Brammen durch Brennschneiden innerhalb einer Stahlwerksanlage
Procedure and device for scarfing treatment for eliminating heat cracks by oxygen cutting on slabs within a steel works installation

(30) Priorité: 26.11.1990 FR 9014753
(43) Date de publication de la demande: 03.06.1992
(73) Titulaire: SOLLAC, 92800 Puteaux (FR)
(72) Inventeur: Brando, Gilbert, F-13140 La Carraire Miramas (FR); Gangnery, Jean-Claude, F-13110 Fos sur Mer (FR); Rios, Jean-Claude, F-13500 Croix-Sainte-Martigue (FR); Salon, Jean-Louis, F-13200 Raphele Les Arles (FR)
(74) Mandataire: Martin, Jean-Paul

(56) Documents cités:
- DE-A- 2 748 789
- FR-A- 2 398 574

## Description

La présente invention concerne un procédé et un dispositif d'usinage par flamme de chalumeau pour écriquer par oxycoupage une crique longitudinale d'une brame dans une installation sidérurgique, selon le préambule des revendications 1 et 3 (voir p.4. FR-A-2 398 574). On sait que dans les installations sidérurgiques, les brames sortent de la coulée continue avec, parfois, des défauts de surface, des fissures appelées criques, qu'il convient d'éliminer afin de permettre un bon laminage ultérieur.

En effet, les parois des criques sont du métal oxydé. Or, toute présence d'oxyde dans le métal est très néfaste lors de l'opération suivante de laminage, et ne manquerait pas de provoquer des défauts dans le produit fini.

Ces criques sont éliminées par une opération d'écriquage, c'est-à-dire d' usinage de surface par flamme de chalumeau, opération habituellement appelée "chalumage" de surface, le chalumeau étant disposé au-dessus de la brame avec une inclinaison appropriée et à hauteur convenable.

Pendant cette opération, toute trace d'oxyde interne débouchant, empêchant les deux lèvres des criques de se ressouder par forgeage au cours du laminage, est éliminée.

L'opération consiste à enlever du métal au droit de la crique jusqu'à dépasser le fond de la crique et arriver à du métal sain, non oxydé. Une telle opération d'écriquage débute par exemple par chauffage ponctuel du métal de la brame par la flamme du chalumeau, associé à une amorce constituée d'un jet de poudre de fer, ou d'une électrode de fer qui entame une réaction chimique de surface avec l'oxygène de coupe du chalumeau, semblable à la réaction d'oxycoupage. La réaction étant exothermique, il suffit de déplacer la buse du chalumeau avec un faible apport calorique le long de la crique, pour que ladite réaction se propage.

L'inconvénient de ce procédé réside dans le fait qu'il engendre de chaque côté de l'emplacement de la crique éliminée, la formation d'une bavure que l'on ne peut pas enlever par un procédé thermique d'une façon simple, car si on adopte des chalumeaux auxiliaires, il y a création de nouvelles bavures.

Pratiquement, cette bavure est éliminée manuellement par un opérateur, au moyen d'une meule. Mais pour que celui-ci puisse intervenir, il est nécessaire que la température de la brame ait au préalable suffisamment baissé. Il est alors trop tard, après enlèvement de la bavure, pour réinsérer la brame dans le lot.

La présente invention a donc pour but de remédier à ces inconvénients en agissant non pas après la formation de la bavure d'oxycoupage, mais avant, afin d'empêcher sa génération.

Ce but est atteint par un procédé selon la revendication 1 et un dispositif selon la revendications 3.

Ainsi le procédé selon l'invention permet de granuler l'éjection de métal due à l'usinage par la flamme du chalumeau ("Chalumage") au ras du bain d'oxycoupage, quand le métal est encore en phase liquide avant de devenir une bavure solide, et ce au moyen de la lame d'eau précitée. Cette dernière est injectée à haute pression, c'est-à-dire d'au minimum 200 bars environ.

Suivant une particularité de l'invention, la lame d'eau passe au-dessus du flux gazeux du chalumeau sans le couper. Le flux gazeux n'est donc pas perturbé, et la lame d'eau frappe la brame juste au ras du bain d'oxycoupage, au point de formation du pied de la bavure. Ainsi le métal oxydé est éjecté par l'impact de la lame d'eau loin au-delà du bain d'oxycoupage et de la brame, et ne peut donc donner naissance à une bavure indésirable.

Le dispositif également visé par l'invention comprend un chalumeau et une buse de projection d'une lame d'eau et est caractérisé en ce qu'il comprend une pompe a haute pression reliée à la buse et capable de délivrer une lame d'eau une pression minimum de 200 bars.

On comble en effet de manière surprenante, que les meilleurs résultats ne sont atteints qu'à partir de cette pression.

Suivant une caractéristique de l'invention, la buse est inclinée sur la verticale d'un angle compris entre 45 degrés et 75 degrés environ, notamment 60 degrés.

Suivant une particularité de l'invention, la buse est pourvue de moyens de dispersion latérale de l'eau.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en perspective, avec arrachements, d'une forme de réalisation du dispositif d'écriquage visé par l'invention.

La figure 2 est une vue en perspective partielle du dispositif de la figure 1 sous un autre angle, montrant notamment la disposition de la buse et de la lame d'eau par rapport au chalumeau.

La figure 3 est une vue en élévation latérale du dispositif suivant la flèche K de la figure 2.

La figure 4 est une vue de dessus en plan de la zone de la crique, montrant l'inclinaison sur le plan vertical axial de celle-ci, des projections sur un plan horizontal des axes de la buse et du chalumeau.

Le dispositif représenté au dessin est destiné à l'usinage par la flamme 1 d'un chalumeau 2 d'une brame 3, pour éliminer par oxycoupage une crique longitudinale 4 formée dans la brame. Le chalumeau 2, de type connu en soi, est suspendu à un support 5 et articulé sur celui-ci de manière à pouvoir à la fois pivoter autour d'un axe vertical et basculer autour d'un axe horizontal, pour prendre la position désirée au-dessus de la brame 3. Ce chalumeau 2 a son axe XX incliné sur la verticale d'un angle approprié A, compris entre environ 45 et 75 degrés, de préférence 60 degrés environ, cette inclinaison A étant dans le sens du déplacement du chalumeau 2 le long de la crique 4.

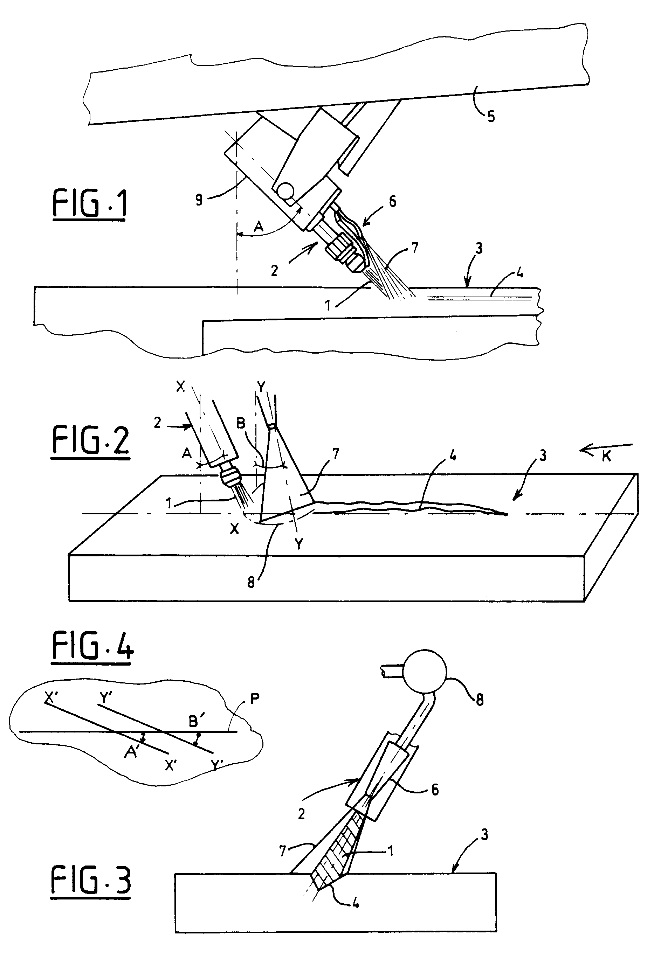

L'axe XX du chalumeau 2, et plus précisément sa projection X'X' sur un plan horizontal (figure 4), est inclinée d'un angle A' sur le plan vertical axial P de la crique 4. L'angle A' est compris entre environ 15 degrés et 45 degrés, de préférence 30 degrés.

Le dispositif comprend également une buse 6 de projection d'une lame d'eau 7 sur le bain 8 d'oxycoupage généré par la flamme 1. Cette buse 6 est alimentée par une pompe à haute pression 8 accrochée au support 5, et capable d'alimenter la buse 6 à une pression au minimum 200 bars. La buse 6 et le chalumeau 2 sont montés sur une même pièce 9 articulée sur le support 5 de manière pivotante et basculante, et sont donc mécaniquement solidaires l'un un de l'autre.

La buse 6 a un axe YY, incliné sur la verticale d'un angle B compris entre 45 et 75 degrés environ, notamment 60 degrés. D'autre part, la buse 6 ou plus précisément la projection Y'Y' de son axe YY sur un plan horizontal (figure 4) est inclinée sur le plan axial vertical P de la crique 4 d'un angle B', compris entre environ 15 et 45 degrés, notamment 30 degrés. La buse 6 est convenablement placée au-dessus du nez du chalumeau 2, ses angles d'inclinaison B et B' étant du même côté que ceux du chalumeau.

La buse 6 peut être une buse combinée, ayant un diamètre d'éjection par exemple de 0,2 millimètre, et des moyens fait pour disperser latéralement l'eau, par exemple des méplats, réalisés de manière connue en soi et non représentés. La pompe 8 est de type connu, par exemple une pompe utilisée pour le nettoyage haute pression.

Le dispositif peut être piloté par un automate gérant les fonctions de la machine d'usinage par flamme de chalumeau (chalumage), le déplacement du couple chalumeau 2 - buse 6 le long de la crique 4 et la pompe 8. Les temporisations programmables permettent de ne commencer l'ébavurage qu'après l'obtention d'un bain 8 d'oxycoupage stable.

La mise en oeuvre du procédé selon l'invention au moyen du dispositif d'usinage qui vient d'être décrit, est la suivante.

Comme déjà indiqué, l'invention a pour but d'empêcher la génération de la bavure d'usinage par flamme de chalumeau, en granulant l'éjection de métal issue de la passe de "chalumage" avant sa solidification, quand elle est encore en phase liquide. Cette granulation se fait par décohésion, du fait d'un refroidissement brutal au moyen de la lame d'eau 7 passant au-dessus du flux gazeux 1 du chalumeau 2, frappant la brame 3 juste au ras du bain 8 d'oxycoupage, au point de formation du pied de la bavure.

Lorsqu'on chauffe le métal au niveau de la crique 4, au moyen du chalumeau 2 associé à une amorce, le métal se liquéfie au droit du chalumeau, au niveau du point d'impact de la flamme, et forme le bain 8 d'oxycoupage, dont la forme est sensiblement ovale (figure 2). La lame d'eau 7 est projetée au ras du flux gazeux 1 venant attaquer la brame 3 au bord du bain 8, refroidissant ainsi brutalement l'éjection. Le refroissement brutal de l'éjection d'oxycoupage entraîne une projection de métal oxydé beaucoup plus importante que celle obtenue jusqu'à présent en l'absence d'une buse 6 de projection d'une lame d'eau haute pression, ce qui empêche la génération de la bavure.

De préférence l'inclinaison B' de la lame d'eau 7 et de l'axe YY sur le plan axial P de la crique 4, est identique à l'inclinaison A'de la projection X'X'de l'axe XX du chalumeau 2.

L'énergie issue de la lame d'eau 7 à haute pression refroidit rapidement la crasse éjectée par le chalumeau 2, ce qui entraîne un retrait rapide et, comme l'opération est exécutée en phase liquide avant solidification de la bavure, une granulation de celle-ci. Il est important que le jet 7 ne soit pas trop abondant, car un excès d'eau entraînerait une extinction du bain 8 d'oxycoupage. A titre d'exemple numérique indicatif, le débit de la pompe 8 et de la buse 6 peut être de l'ordre d'au maximum 100 litres/heure environ.

De même, il est important que la lame d'eau 7 ne coupe pas la flamme 1, ce qui entraînerait une extinction immédiate du bain d'oxycoupage 8. (Par contre le chalumeau 2, possédant son carburant et son comburant propres, est capable de maintenir sa flamme immergée).

Le procédé et le dispositif selon l'invention sont applicables à une machine de sondage et d'écriquage automatique.

Selon la technique antérieure, après la passe ou la série de passes successives réalisées de manière automatique, il fallait éliminer par brûlage la bavure formée, en pilotant manuellement la machine. Cette opération particulièrement fastidieuse entraînait un temps d'utilisation de la machine plus que doublé.

Avec le procédé selon l'invention, la bavure ne se forme plus, de sorte que ce temps d'utilisation peut être réduit de moitié. Outre ce gain de temps sur la machine, le temps d'immobilisation de la brame 3 est également réduit, ce qui constitue un avantage très important. En effet, le fait de pouvoir remettre une brame affectée par un défaut dans le lot où elle avait été coulée, permet de l'introduire dans le four à brames en même temps que les autres du même lot.

Outre l'application spécifique citée ci-dessus, le procédé et le dispositif selon l'invention peuvent être mis en oeuvre dans d'autre applications, par exemple toute application d'usinage de surface par flamme de chalumeau autre que celle réalisée pour réparer les criques dans une installation sidérurgique, ou encore pour toute bavure générée dans une découpe par un chalumeau oxycoupeur, dans la mesure ou il est possible d'accéder à la zone d'éjection des scories.

## Revendications

1. Procédé d'usinage par flamme (1) de chalumeau (2) pour éliminer par oxycoupage une crique longitudinale (4) d'une brame (3) dans une installation sidérurgique, dans lequel on utilise un chalumeau (2) incliné à la fois sur la verticale et sur un plan vertical axial (P) de la crique pour réaliser un bain (8) d'oxycoupage, et on dirige sur la brame une lame d'eau (7) formant un jet plat, caractérisé en ce que la lame d'eau (7) passe au dessus du flux gazeux (1) du chalumeau (2) sans le couper, est inclinée d'angles déterminés sur la verticale (B) et sur ledit plan vertical axial, de telle sorte qu'elle frappe la brame dans le bain d'oxycoupage, et en ce que la pression de la lame d'eau (7) est au minimum de 200 bars.

2. Procédé selon la revendication 1, caractérisé en ce que la lame d'eau (7) est inclinée sur la verticale d'un angle (B) compris entre 45 degrés et 75 degrés environ, et notamment de 60 degrés.

3. Dispositif d'usinage par flamme (1) de chalumeau (2) pour la mise en oeuvre du procédé selon l'une des revendications 1 et 2, comprenant un chalumeau (2) et une buse (6) de projection d'une lame d'eau (7), caractérisé en ce qu'il comprend une pompe (8) à haute pression reliée à la buse et capable de délivrer une lame d'eau à une pression minimuun de 200 bars.

4. Dispositif selon la revendication 3, caractérisé en ce que la buse (6) est inclinée sur la verticale d'un angle (B) compris entre 45 et 75 degrés environ, notamment 60 degrés.

5. Dispositif selon la revendication 4, caractérisé en ce que le chalumeau (2) et la buse (6) sont inclinés, par rapport au plan vertical axial (P) passant par l'axe de la crique (4), d'un angle (A', B') compris entre 15 degrés et 45 degrés, notamment 30 degrés.

6. Dispositif selon la revendication 5, caractérisé en ce que la buse (6) est pourvue de moyens de dispersion latérale de l'eau.

## Claims

1. Method of machining with the flame (1) of a blowtorch (2) in order to eliminate a longitudinal crack (4) in a slab (3) by oxygen cutting in an iron and steel works, in which a blowtorch (2) is used which is inclined both to the vertical and to an axial vertical plane (P) of the crack in order to form a pool (8) of metal in fusion, and a sheet of water (7) forming a flat jet is directed onto the slab, characterised in that the sheet of water (7) passes above the gas flow (1) of the blowtorch (2) without cutting into it and is inclined at predetermined angles to the vertical (B) and to the said axial vertical plane in such a way that it strikes the slab in the pool of metal in fusion, and that the pressure of the sheet of water (7) is at minimum 200 bars.

2. Method as claimed in Claim 1, characterised in that the sheet of water (7) is inclined to the vertical by an angle (B) between approximately 45 degrees and 75 degrees, and particularly 60 degrees.

3. Device for machining with the flame (1) of a blowtorch (2) for carrying out the method as claimed in Claims 1 and 2, comprising a blowtorch (2) and a nozzle (6) for projecting a sheet of water (7), characterised in that it comprises a high-pressure pump (8) connected to the nozzle and capable of delivering a sheet of water at a minimum pressure of 200 bars.

4. Device as claimed in Claim 3, characterised in that the nozzle (6) is inclined to the vertical by an angle (B) between approximately 45 and 75 degrees, particularly 60 degrees.

5. Device as claimed in Claim 4, characterised in that the blowtorch (2) and the nozzle (6) are inclined with respect to the axial vertical plane (P) passing through the axis of the crack (4) by an angle (A', B') between 15 degrees and 45 degrees, particularly 30 degrees.

6. Device as claimed in Claim 5, characterised in that the nozzle (6) is provided with means for lateral dispersion of the water.

## Patentansprüche

1. Verfahren zur Bearbeitung mit Hilfe der Flamme (1) eines Schweißbrenners (2), um durch Brennschneiden einen längsverlaufenden Riß (4) einer Bramme (3) in einer Eisenhütten-Anlage zu beseitigen, bei dem man einen Schweißbrenner (2) verwendet, der gleichzeitig zur Senkrechten und zu einer axialen senkrechten Ebene (P) des Risses geneigt ist, um ein Brennschneide-Bad (8) zu realisieren, und auf der Bramme eine Schneide (7) aus Wasser führt, die einen flachen Strahl bildet, dadurch gekennzeichnet, daß die Wasserschneide (7) oberhalb des Gasstromes (1) des Schweißbrenners (2) ohne zu schneiden hindurchgeht und in einen bestimmten Winkel zur Senkrechten (B) und zu der genannten axialen senkrechten Ebene in der Weise geneigt ist, daß sie die Bramme in das Brennschneide-Bad drückt, und dadurch, daß der Druck der Wasserschneide (7) mindestens 200 bar beträgt.

2. Verfahren nach Anspruch 1, dadurch gekennzeichnet, daß die Wasserschneide (7) zur Senkrechten in einem Winkel (B) zwischen etwa 45° und 75° und insbesondere von 60° geneigt ist.

3. Vorrichtung zur Bearbeitung mit Hilfe der Flamme (1) eines Schweißbrenners (2) für die Durchführung des Verfahrens nach einem der Ansprüche 1 und 2, umfassend einen Schweißbrenner (2) und eine Düse (6) für das Ausspritzen einer Wasserschneide (7), dadurch gekennzeichnet, daß sie eine Hochdruckpumpe (8) umfaßt, die mit der Düse verbunden und geeignet ist, eine Wasserschneide mit einem Druck von mindestens 200 bar auszubilden.

4. Vorrichtung nach Anspruch 3, dadurch gekennzeichnet, daß die Düse zur Senkrechten in einem Winkel (B) zwischen etwa 45° und 75° und insbesondere von 60° geneigt ist.

5. Vorrichtung nach Anspruch 4, dadurch gekennzeichnet, daß der Schweißbrenner (2) und die Düse (6) im Verhältnis zur axialen senkrechten Ebene (P), die durch die Achse des Risses (4) hindurchgeht, in einem Winkel (A', B') zwischen 15° und 45°, insbesondere von 30°, geneigt sind.

6. Vorrichtung nach Anspruch 5, dadurch gekennzeichnet, daß die Düse (6) mit Mitteln zur seitlichen Verteilung des Wassers ausgestattet ist.
